# EUROPEAN PATENT APPLICATION

(11) **EP 2 670 093 A1**
(43) Date of publication of application: **04.12.2013**
(21) Application number: 11856831.0
(22) Date of filing: 16.11.2011
(51) Int. Cl.: H04L 12/56, G06F 13/00

(54) **NETWORK SYSTEM, CONTROL DEVICE AND OPTIMUM PATH CONTROL METHOD**

(30) Priority: 26.01.2011 JP 2011014053
(71) Applicant: NEC Corporation, Tokyo 108-8001 (JP)
(72) Inventor: ASHIHARA Koji, Tokyo 108-8001 (JP)
(74) Representative: Vossius & Partner
(86) International application number: PCT/JP2011/076395
(87) International publication number: WO 2012/101890

(57) **Abstract**

In a central control-type network system, a flexible network control is carried out to improve operability and performance of the network. Specifically, in a network system which carries out a central control to a communication route, an optimal route is selected in consideration of a load situation of network equipments, a load situation of server equipments, and a load situation of applications. A control unit, which carries out the central control to all the equipments of a system such as a network and a server, calculates an optimal route and sets a communication route to the network equipments. Also, the optimal route is determined in consideration of a congestion situation of the network equipments and the load situation of the server equipments and the applications. Moreover, the optimal route is determined in consideration of a phenomenon which could occur in the future from a past congestion situation and a past load situation in addition to a current situation.

## Description

### Technique Field

The present invention relates to a network system, and especially, to an optimal route controlling method in a central control-type network.

### Background Art

In a route control of a conventional network equipment, there were the following problems (1) to (3).
(1) In a system using the conventional network equipment (NW equipment), each network equipment autonomously determines a route. Therefore, an optimal route sometimes cannot be selected for the whole network. The conventional network equipment individually (autonomously) selects an optimal route by using a route selection (routing) protocol. As an example of a standard routing protocol, routing protocols such as RIP (Routing Information Protocol), and OSPF (Open Shortest Path First) are known, which determine a route based on the number of hops and a link cost. In such a standard routing protocol, a route cannot be selected according to the load situation of the network. For example, when the congestion has occurred in the network, packets with low priority have been discarded by the QoS function. Even in case where there is a margin in another route and the packets are relieved through by-passing, it is difficult to avoid in the conventional technique.
(2) In the conventional network system, it is not possible to select the optimal route in consideration of a load situation of the server and so on, because a route is selected with the technique described in the above (1). In the conventional technique, a load distribution apparatus (load balancer) checks the load situation of the server regularly and the load distribution apparatus optimizes a system through a method of selecting the server of a low load. Because the network layer and the application layer are independently optimized, it is difficult to optimize the whole system. Also, in the system which uses the load distribution apparatus, all communications are destined for the load distribution apparatus and this constraint is a factor by which the whole system cannot be optimized.
(3) In a conventional best effort-type network system, it is not possible to carry out the route selection in consideration of the load situation. To guarantee specific communication, all of the route communication units need be set to secure a band and the availability, the expandability, and the operate-ability reduces.

As the related technique, a load distribution system is disclosed in Patent Literature 1 (JP 2000-250878A). In this related technique, a client requests determination of a server to a communication route translation unit, and if there is no difference in response time as a result of server search, the server and a route having the smallest load are determined based on a CPU usage rate.

Also, an optimal alternative route selecting method is disclosed in Patent Literature 2 (JP H06-120943A). In this related technique, the CPU usage rates of a plurality of switching stations are measured, and the measured CPU usage rates are compared with a predetermined threshold value. The switching station having the CPU usage rate which exceeds the predetermined threshold value is stored and the optimal alternative route is determined that the switching station is not used as a relaying station.

### Citation List

[Patent Literature 1] JP 2000-250878A
[Patent Literature 2] JP H06-120943A
[Non-patent literature 1] "OpenFlow Switch Specification, Version 1.0.0", [online] December 31, 2009, the Internet (URL:http://www.openflowswitch. org/documents/openflow-spec-v1.0.0.pdf)

### Summary of the Invention

In the present invention, it is attempted to solve the conventional problem through the following (1) to (3).
(1) A control unit which carries out central management to all equipments of a network and a system calculates an optimal route and sets a communication route to the network equipments.
(2) A congestion situation of the network and a load situation of servers and applications are checked to determine an optimal route.
(3) A phenomenon which will occur in the future is checked from the past congestion situation, and the past load situation in addition to the present situation to determine an optimal route.

The network system according to the present invention includes: a network equipment; a control unit configured to set an entry defining a rule and an operation to uniformly control a packet as a flow, on a flow table of the network equipment when receiving an inquiry of the packet from said network equipment; and server equipments configured to form an identical server group and shares a virtual address allocated to the server group. The control unit includes: means for collecting and storing performance data from each of the network equipment and the server equipment; means for selecting an optimal server equipment from among the server equipments of the server group based on the performance data of the server equipments; means for determining an optimal route to the optimal server equipment based on the performance data of the network equipments; and means for registering an entry to transfer the packet for the virtual address to a next node on the optimal route on the network equipment on the optimal route.

An optimal route controlling method according to the present invention is executed by a computer used as a control unit. The optimal route controlling method includes: communicating with a network equipment as a management target; and communicating with a server equipment which form an identical server group and which share a virtual address allocated to the server group; collecting and storing performance data from each of said network equipments and said server equipments; selecting an optimal server equipment from among server equipments of the server group based on the performance data of said server equipment; determining an optimal route to an optimal server equipment based on the performance data of said network equipment; registering an entry defining a rule to uniformly control packets as a flow and an action to transfer the packets for the virtual address to a next node on the optimal route, in the network equipments on the optimal route.

A program according to the present invention is a program to make a computer execute processing of the above-mentioned optimal route controlling method. It should be noted that the program according to present invention can be stored in a storage unit and storage media.

Thus, the optimal route can be selected in an application level or a service level, including the server equipments and the network equipments. Also, through estimation from past data, a route can be selected in consideration of a problem which would occur in the future. As a result, the route control becomes possible so as to be optimized not in each layer but a whole system.

### Brief Description of the Drawings

FIG. 1 is a diagram showing a configuration example of a network system according to the present invention;
FIG. 2 is a diagram showing an exemplary embodiment of the network system according to the present invention;
FIG. 3 is a diagram showing an example of a NW equipment table;
FIG. 4 is a diagram showing an example of a server equipment table;
FIG. 5 is a flow chart showing a first operation example of optimal route control processing; and
FIG. 6 is a flow chart showing a second operation example of the optimal route control processing.

### Description of Exemplary embodiments

### <Presupposition>

In the present invention, a network system of a target is a CU (C: control plane /U: user plane) separation type network in which switches, terminals and so on (user plane) is controlled from an external controller (control plane). An open flow network using the open flow (OpenFlow) technique, in which switches are controlled by a controller so as to carry out a route control of the network, is exemplified as an example of the CU separation type network. It should be noted that the opening flow network is an example only.

### (Description of open flow network)

In the open flow network, a controller such as OFCs (OpenFlow Controller) controls the operations of switches such as OFSs (OpenFlow Switches) by operating flow tables of the switches. The controller and the switch are connected by a secure channel such that the controller can control the switch by using a control message which conforms to the open flow protocol.

The switches in the open flow network are edge switches or core switches, which form the open flow network and are under the control of the controller. A series of packets which flow through the same route from the reception of the packets in the input side edge switch in the open flow network to the transmission of the packets in the output side edge switch are called a flow. The packet may be read as a frame.

A flow table is a table in which an entry is registered to define predetermined processing (action) to be carried out to a packet (communication data) which conforms to a predetermined match condition (rule).

The rule of the entry is defined based on a combination of some or all of a destination address, a source address, a destination port, and a source port, which are contained in a header field of the packet in protocol hierarchies, and is identifiable. It should be noted that it is supposed that the above-mentioned address may contain a MAC address (Media Access Control Address) and an IP address (Internet Protocol Address). Also, data of an ingress port may be used as the rule of the entry, in addition to the above.

The action of the entry shows any of operations such as "output to a specific port", "discard", and "rewrite a header". For example, if identification data of an output port (output port number and so on) is shown in the action of the entry, the switch outputs the packet to the corresponding port, and if identification data of the output port is not shown, the switch discards the packet. Or, if header data is shown as the action of the entry, the switch rewrites the header of the packet based on the header data.

The switch in the open flow network executes the action of the entry to a packet group (a series of packets) which conforms with the rule of the entry.

The details of the open flow technique are described in Non-Patent Literature 1.

### [Exemplary Embodiments]

Exemplary embodiments of the present invention will be described below in detail with reference to the attached drawings.

### (Whole configuration)

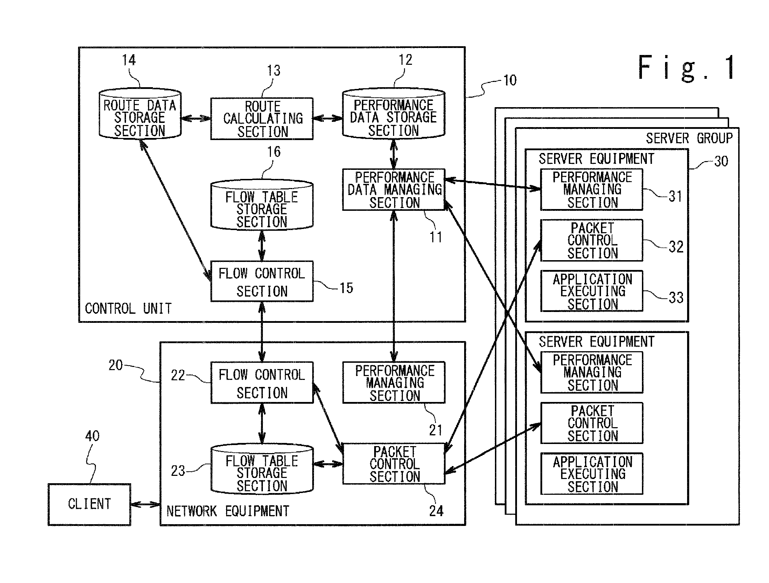

As shown in FIG. 1, the network system according to the present invention contains a control unit 10, network equipments 20 (20-i, i = 1 to n: n is the number of network equipments), server equipments 30 (30-j, j = 1 to s: s is the number of server equipments), and a client 40.

The control unit 10 is equivalent to a controller in the open flow network. The control unit 10 performs the central control of management target equipments and collects performance data of all the management target equipments. In this case, the control unit 10 performs the central control on all the equipments of the network system such as the network equipments 20 (20-i, i = 1 to n) and the server equipments 30 (30-j, j = 1 to s), which are managed as the management target equipments. In this case, the control unit 10 is supposed to be connected with each of the network equipments 20 (20-i, i = 1 to n) by a secure channel.

Each of the network equipments 20 (20-i, i = 1 to n) is equivalent to the switch in the open flow network. Each of the network equipments 20 (20-i, i = 1 to n) performs communication in response to an instruction from the control unit 10. Specifically, the network equipment 20 (20-i, i = 1 to n) transfers packets according to the flow table set by the control unit 10. One or more network equipments 20 (20-i, i = 1 to n) generally configure a network.

The server equipment 30 (30-j, j = 1 to s) provides service such as an application to an end user and a client. The server equipments 30 (30-j, j = 1 to s) which provide the same service (e.g. Web service) form a group. That is, the server equipment 30 (30-j, j = 1 to s) belongs to the server group. There are the groups for the number of server groups. An actual IP address is allocated to the server equipment 30 (30-j, j = 1 to s), and a virtual IP address is allocated commonly to all the server equipments 30 (30-j, j = 1 to s) which belong to an identical server group. The virtual IP address is necessary to pretend as if the server group is one server equipment, when load distribution of requests from the client are carried out. That is, the virtual IP address is allocated to one server group and all the server equipments 30 (30-j, j = 1 to s) which belong to the server group, share the virtual IP address. It should be noted that actually a virtual MAC address may be used instead of the virtual IP address.

The client 40 communicates with the server equipments 30 (30-j, j = 1 to s) through a route which is formed by the network equipments 20 (20-i, i = 1 to n).

The network equipments 20 (20-i, i = 1 to n), the server equipments 30 (30-j, j = 1 to s) and the client 40 are nodes on the network. The control unit 10 is also one of the nodes when existing on the network.

### (Function details)

Next, the details of a function of each apparatus will be described.

### (Control unit)

The control unit 10 is provided with a performance managing section 11, a performance data storage section 12, a route calculating section 13, a route data storage section 14, a flow control section 15 and a flow table storage section 16.

The performance managing section 11 collects performance data such as topology data, CPU usage rate, and NW usage rate (line usage rate) from each of the network equipments 20 (20-i, i = 1 to n) and the server equipments 30 (30-j, j = 1 to s), which are managed by the control unit 10. It should be noted that NW means a network.

The performance data storage section 12 stores the performance data such as the topology data (connection situation of the network equipments and the server equipments, the IP addresses, the MAC addresses), the CPU usage rate, the NW usage rate which are collected from all the network equipments 20 (20-i, i = 1 to n) and the server equipments 30 (30-j, j = 1 to s) which are managed by the control unit.

The route calculating section 13 calculates an optimal route based on the topology data read from the performance data storage section 12. It should be noted that the route calculating section 13 may directly receive the topology data and so on from the performance managing section 11.

The route data storage section 14 stores the route data as the calculation result by the route calculating section 13.

The flow control section 15 defines an entry to each of the network equipments 20 (20-i, i = 1 to n) based on the route data read from the route data storage section 14 and registers (sets) the entry on its own flow table and each of the flow tables of network equipments 20 (20-i, i = 1 to n). The flow control section 15 transmits a control message for the entry registration based on the open flow protocol when registering the entry on the flow table of each network equipment 20 (20-i, i = 1 to n).

The flow table storage section 16 retains the flow table on which the entries to all the network equipments 20 (20-i, i = 1 to n) which are managed by the control unit 10 are registered.

### (Network equipment)

The network equipment 20 (20-i, i = 1 to n) is provided with a performance managing section 21, a flow control section 22, a flow table storage section 23 and a packet control section 24.

The performance managing section 21 communicates the NW usage rate, the CPU usage rate, and its own IP addresses and MAC addresses to the control unit.

The flow control section 22 requests the entry of a flow to the control unit 10 and registers the received entry on the flow table. It should be noted that the flow control section 22 does not have to request the entry when the entry is registered on the flow table from the control unit 10 previously (it is of a proactive type). The flow control section 22 registers the entry on the flow table according to the control message when receiving the control message for the entry registration based on the open flow protocol from the control unit 10.

The flow table storage section 23 retains the flow table on which the entry for the network equipment has been registered. That is, the flow table storage section 23 retains (individually) the flow table every for network equipment.

The packet control section 24 carries out processing of transferring or discarding of the packet and so on according to the action defined in the entry for the packet corresponding to the rule of the entry registered on the flow table. Also, the packet control section 24 may instruct the flow control section 22 to request the entry of the flow to the control unit 10 when the packet arrives which does not correspond to the rule of the entry registered on the flow table. For example, the packet control section 24 transfers an obscure packet to the flow control section 22. The flow control section 22 inquires the packet (unknown packet) to the control unit 10 as a request of the entry of the flow.

### (Server equipment)

The server equipment 30 (30-j, j = 1 to s) is provided with a performance managing section 31, a packet control unit 32 and an application executing section 33.

The performance managing section 31 communicates the CPU usage rate, its own actual IP address and virtual IP address, and MAC address to the control unit 10. In this case, the performance managing section 31 monitors the operation situation and the performance of the packet control unit 32 and the application executing section 33.

The packet control unit 32 carries out the transfer and discard of the packet. Here, the packet control unit 32 carries out the transfer or discard of a reception packet to the application executing section 33. Also, it transfers or discards the packet received from the application executing section 33 to a transmission destination.

The application executing section 33 executes a service application for a service to be provided to the client 40 according to the packet transferred from the packet control unit 32 and transmits a response packet to the client 40 through the packet control unit 32.

### (Example of hardware configuration)

As examples of the control unit 10, the server equipments 30 (30-j, j = 1 to s), and the client 40, computers such as a PC (personal computer), appliance, a thin client terminal/ server, a workstation, a mainframe, a supercomputer are exemplified. Also, the control unit 10, the server equipment 30 (30-j, j = 1 to s) and the client 40 may be an extension board which is installed on the computer and a virtual machine (VM) built on a physical machine.

It should be noted that the client 40 may be a portable phone, a smart phone, a smart book, a car navigation system, a portable type game machine, a home-use game machine, a portable type music player, a handy terminal, a gadget (electronic equipment), an interactive TV, a digital tuner, a digital recorder, information home appliance, OA (Office Automation) equipment and so on. Also, the client 40 may be installed in a movement body such as a vehicle, a ship, and an aircraft.

As an example of a network equipment 20 (20-i, i = 1 to n), a network switch, a router, a proxy, a gateway, a firewall, a load balancer (a load distribution apparatus), a band controller (a packet shaper), a supervisory control and data acquisition (SCADA), a gatekeeper, a base station, an access point (AP), a communications satellite (CS) and a computer having a plurality of communication ports are exemplified. Also, the network equipment 20 (20-i, i = 1 to n) may be a virtual switch.

Although not shown, the control unit 10, the network equipments 20 (20-i, i = 1 to n), the server equipments 30 (30-j, j = 1 to s) and the client 40 are realized by a processor which executes predetermined processing based on a program, a memory which stores the program and various types of data, and an interface for communication to connect with the network.

As an example of the above-mentioned processor, a CPU (Central Processing Unit), a network processor (NP), a microprocessor, a microcontroller and a semiconductor integrated circuit (IC) having a function of an exclusive use are exemplified.

As an example of the above-mentioned memory, a semiconductor memory device such as RAM (Random Access Memory), a ROM (Read Only Memory), an EEPROM (Electrically Erasable and Programmable Read Only Memory) and a flash memory, an auxiliary storage such as a HDD (Hard Disk Drive) and an SSD (Solid State Drive), a removable disk such as a DVD (Digital Versatile Disk), a storage media such as an SD memory card (Secure Digital memory card) and so on are exemplified. Also, a buffer and a register may be used. Or, the above memory may be a storage apparatus using a DAS (Direct Attached Storage), an FC-SAN (Fibre Channel - Storage Area Network), a NAS (Network Attached Storage), an IP-SAN(IP - Storage Area Network), and so on.

It should be noted that the above-mentioned processor and memory may be unified. For example, in recent years, a 1-chip system such as a microcomputer has been developed. Therefore, a case is thought of that the 1-chip microcomputer installed in an electronic equipment and so on is composed of the above-mentioned processor and memory.

As an example of the above-mentioned interface and so on, a substrate (motherboard, I/O board) corresponding to a network communication, a semiconductor integrated circuit such as a chip, a network adapter such as an NIC (Network Interface Card) and so on, a communication device such as a similar extension card, an antenna and a communication port such as a connector and so on are exemplified.

Also, as an example of the network, the Internet, a LAN (Local Area Network), a wireless LAN (Wireless LAN), a WAN (Wide Area Network), backbone, a CATV line, a fixation telephone network, a mobile phone network, WiMAX (IEEE 802. 16a), 3G (3rd Generation), a dedicated line (leased line), IrDA (Infrared Data Association), Bluetooth (registered trademark), a serial communication line, a data bus and so on are exemplified.

It should be noted that the components of each of the control unit 10, network equipments 20 (20-i, i = 1 to n), the server equipments 30 (30-j, j = 1 to s) and the client 40 may be a module, a component, an exclusive-use device or these start-up (call) programs.

However, the present invention is actually not limited to these examples.

### (Optimal route control processing)

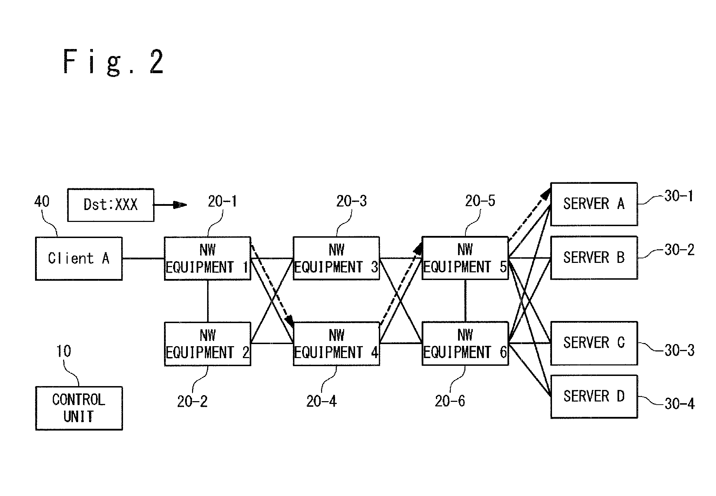

Referring to FIG. 2 to FIG. 6, the optimal route control process according to the present invention will be described.

### (Configuration of exemplary embodiments)

First, referring to FIG. 2, the configuration of an exemplary embodiment of the network system according to the present invention will be described.

It is supposed that the network system of the present exemplary embodiment contains the control unit 10, the network equipments 20 (20-i, I = 1 to 6), the server equipments 30 (30-j, j = 1 to 4) and the client 40.

### (Identification data of each unit)

It should be noted that it is supposed that the identification data of the network equipment 20-1 is "NW equipment 1", the identification data of the network equipment 20-2 is "NW equipment 2", the identification data of the network equipment 20-3 is "NW equipment 3", the identification data of the network equipment 20-4 is "NW equipment 4", the identification data of the network equipment 20-5 is "NW equipment 5", and the identification data of the network equipment 20-6 is "NW equipment 6".

Also, it is supposed that the identification data of the server equipment 30-1 is "server A", the identification data of the server equipment 30-2 is "server B", the identification data of the server equipment 30-3 is "server C", and the identification data of the server equipment 30-4 is "server D".

It is supposed that the identification data of the client 40 is "client A".

### (Server group to which the server belongs)

The server A (server equipment 30-1) and the server C (server equipment 30-3) belong to a server group 1. A virtual IP address "XXX" is allocated to the server group 1. That is, the server A (server equipment 30-1) and the server C (server equipment 30-3) share the virtual IP address "XXX".

The server B (server equipment 30-2) and the server D (server equipment 30-4) belong to a server group 2. A virtual IP address "YYY" is allocated to the server group 2. That is, the server B (server equipment 30-2) and the server D (server equipment 30-4) share the virtual IP address "YYY".

### (Connection relation of units)

The client 40 is mutually connected with the NW equipment 1 (network equipment 20-1). The NW equipment 1 (network equipment 20-1) is mutually connected with the NW equipment 2 (network equipment 20-2), the NW equipment 3 (network equipment 20-3) and the NW equipment 4 (network equipment 20-4). The NW equipment 2 (network equipment 20-2) is mutually connected with the NW equipment 3 (network equipment 20-3) and the NW equipment 4 (network equipment 20-4). The NW equipment 3 (network equipment 20-3) and the NW equipment 4 (network equipment 20-4) are mutually connected with the NW equipment 5 (network equipment 20-5) and the NW equipment 6 (network equipment 20-6). The NW equipment 5 (network equipment 20-5) is mutually connected with the NW equipment 6 (network equipment 20-6). Also, the NW equipment 5 (network equipment 20-5) and the NW equipment 6 (network equipment 20-6) are mutually connected with each of the servers A (server equipment 30-1), the server B (server equipment 30-2), the server C (server equipment 30-3) and the server D (server equipment 30-4).

It should be noted that the control unit 10 is supposed to be connected with each of the network equipments 20 (20-i, I = 1 to 6) by the secure channel.

Also, it is supposed that the control unit 10 has collected the performance data from each of the network equipments 20 (20-i, I = 1 to 6) and the server equipments 30 (30-j, j = 1 to 4).
(Table of performance data)

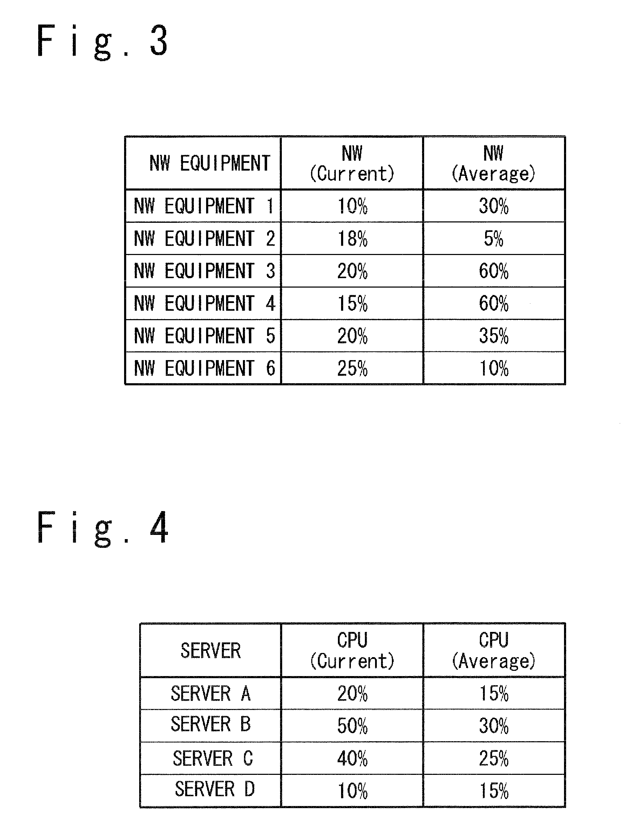

Referring to FIG. 3 and FIG. 4, the table example of the performance data will be described.

The performance data storage section 12 of the control unit 10 has a NW equipment table 121 and a server equipment table 122 as the performance data.

The NW equipment table 121 is a table to manage the usage rates of the network equipments 20 (20-i, I = 1 to 6).

The server equipment table 122 is a table to manage the usage rates of the server equipments 30 (30-j, j = 1 to 4).

### (Details of NW equipment table)

Referring to FIG. 3, the details of the NW equipment table 121 will be described.

The NW equipment table 121 has fields of "NW equipment", "NW (Current)", and "NW (Average)".

The "NW equipment" is a field to store identification data of each network equipment 20 (20-i, I = 1 to 6).

The "NW (Current)" is a field to store data showing the current (the latest) NW usage rate of each network equipment 20 (20-i, I = 1 to 6).

The "NW (Average)" is a field to store a NW average usage rate, i.e. an average for the most recent unit time of data showing the NW usage rate of each network equipment 20 (20-i, i = 1 to 6).

### (Details of server equipment table)

Referring to FIG. 4, the details of the server equipment table 122 will be described.

The server equipment table 122 has fields of "server", "CPU (Current)", and "CPU (Average)".

The "server" is a field to store identification data of each server equipment 30 (30-j, j = 1 to 4).

The "CPU (Current)" is a field to store data showing the current (the latest) CPU usage rate of each server equipment 30 (30-j, j = 1 to 4).

The "CPU (Average)" is a field to store a CPU average usage rate, i.e. an average for the most recent unit time of data showing the CPU usage rate of each server equipment 30 (30-j, j = 1 to 4).

### (Operation 1 of optimal route control processing)

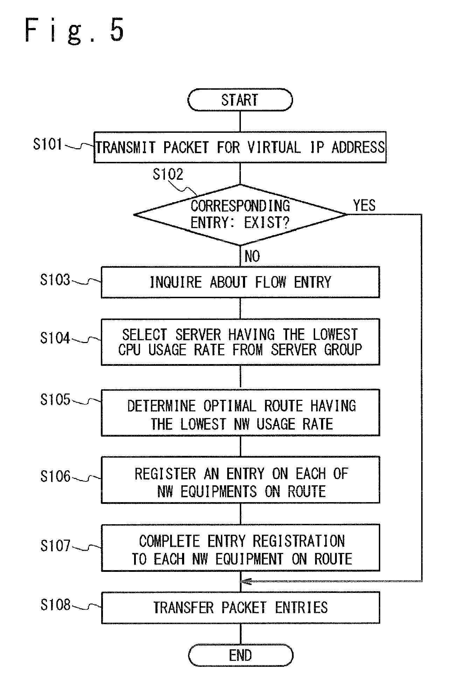

Referring to FIG. 5, the operation of selecting the route in which the "CPU usage rate" and the "NW usage rate" are smallest as the optimal condition condition will be described.

The configuration of the network system shown in FIG. 2 is presupposed in this case.

In the configuration shown in FIG. 2, when the virtual IP address "XXX" is accessed from the "client A" (client 40), the communication for the virtual IP address "XXX" from the "client A" (the client 40) is generated.

### (1) Step S101

The "client A" (client 40) transmits a packet for the virtual IP address "XXX".

### (2) Step S102

The NW equipment 1 (network equipment 20-1) is connected with the "client A" (client 40) as an input side edge switch (Ingress). Therefore, the packet control section 24 of the NW equipment 1 (network equipment 20-1) receives the packet for the virtual IP address "XXX" from the "client A" (client 40) and confirms whether or not the entry corresponding to the received packet exists in the entries registered on the flow table in its own flow table storage section 23. The packet control section 24 transfers the received packet for the virtual IP address "XXX" according to the action defined in the corresponding entry when the corresponding entry exists.

### (3) Step S103

Because the NW equipment 1 (network equipment 20-1) receives the packet for the virtual IP address "XXX" for the first time, the entry corresponding to the received packet does not exist in the entries registered on the flow table in its own flow table storage section 23. Therefore, the flow control section 22 of the NW equipment 1 (network equipment 20-1) requests the entry for the flow of the packets for the virtual IP address "XXX" to the control unit 10.

### (4) Step S104

The control unit 10 selects one of the server A (server equipment 30-1) and the server C (server equipment 30-3) as a destination of the packet for the address "XXX", when the entry for the flow of the packets for the address "XXX" is requested. At this time, the route calculating section 13 of the control unit 10 refers to the server equipment table 122 shown in FIG. 4, to select the server A (server equipment 30-1) with the smallest CPU usage rate, because the CPU usage rate of the server A (server equipment 30-1) is "20%" and the CPU usage rate of the server C (server equipment 30-3) is "40%".

### (5) Step S105

Also, the route calculating section 13 refers to the NW equipment table 121 shown in FIG. 3 to determine the route so that the packet is transferred on the route with the smallest NW usage rate. In this case, the route calculating section 13 determines the NW equipment 4 (network equipment 20-4) as a next node to the NW equipment 1 (network equipment 20-3), because the NW usage rate of the NW equipment 3 (network equipment 20-3) is "20%", and the NW usage rate of the NW equipment 4 (network equipment 20-4) are "15%". Also, it determines the NW equipment 5 (network equipment 20-5) as a next node to the NW equipment 4 (network equipment 20-4), because the NW usage rate of the NW equipment 5 (network equipment 20-5) is "20%", and the NW usage rate of the NW equipment 6 (network equipment 20-6) is "25%". Thus, the route calculating section 13 finally determines the route so that the packet is transferred onto the route of "the NW equipment 1 → the NW equipment 4 → the NW equipment 5 → the server A", which is the route with the smallest NW usage rate. The route calculating section 13 stores the route data in the route data storage section 14. That is, an optimal route is the NW equipment 1 (network equipment 20-1) → the NW equipment 4 (network equipment 20-4) → the NW equipment 5 (network equipment 20-5) → the server A (server equipment 30-1).

### (6) Step S106

The flow control section 15 of the control unit 10 defines the entry to each of the network equipments on the optimal route based on the route data of the optimal route read from the route data storage section 14, and registers the entry on the flow table in its own flow table storage section 16 and the flow table of each network equipment on the optimal route. Here, the network equipment on the optimal route is the NW equipment 1 (network equipment 20-1), the NW equipment 4 (network equipment 20-4) and the NW equipment 5 (network equipment 20-5). The flow control section 15 registers the entry on the flow table of each of the NW equipment 1 (network equipment 20-1), the NW equipment 4 (network equipment 20-4) and the NW equipment 5 (network equipment 20-5) such that the packet for the virtual IP address "XXX" can be transferred to the next node on the optimal route.

### (7) Step S107

The flow control section 22 of each of the network equipments on the optimal route registers an entry used to transfer the packet for the virtual IP address "XXX" to the next node on the optimal route on the flow table in its own flow table storage section 23 according to the entry registration processing from the control unit 10. That is, the NW equipment 1 (network equipment 20-1), the NW equipment 4 (network equipment 20-4) and the NW equipment 5 (network equipment 20-5) registers the entry to transfer the packet for the virtual IP address "XXX" to the next node on the optimal route on the flow table in its own flow table storage section 23 according to the entry registration processing from the control unit 10.

### (8) Step S108

The packet which arrived at the NW equipment 1 (network equipment 20-1) is transferred on the route of "the NW equipment 1 → the NW equipment 4 → the NW equipment 5 → the server A", which is a route of the smallest NW usage rate. That is, the NW equipment 1 (network equipment 20-1) transfers a packet for the virtual IP address "XXX" to the NW equipment 4 (network equipment 20-4) according to the entry registered on its own flow table. The NW equipment 4 (network equipment 20-4) transfers the packet for the virtual IP address "XXX" to the NW equipment 5 (network equipment 20-5) according to the entry registered on its own flow table. The NW equipment 5 (network equipment 20-5) transfers the packet for the virtual IP address "XXX" to the server A (server equipment 30-1) according to the entry registered on its own flow table.

### (Operation 2 of optimal route control processing)

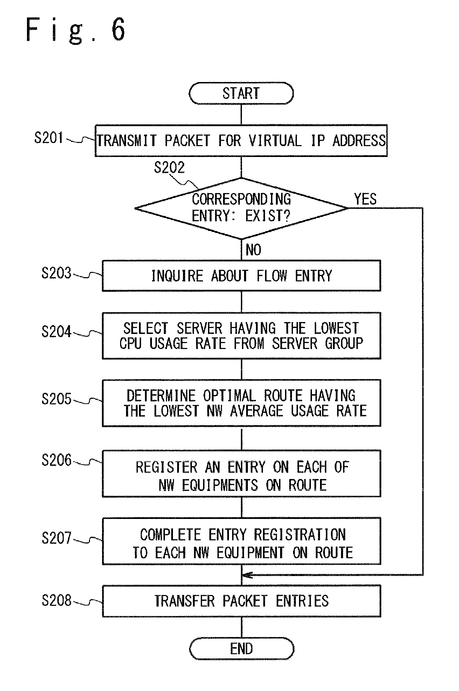

Referring to FIG. 6, the operation of selecting the route with the smallest "CPU average usage rate" and "network average usage rate" as the optimal condition will be described.

In this case, the configuration of the network system shown in FIG. 2 is presupposed. When the "client A" (client 40) accesses the virtual IP address "YYY" in the configuration shown in FIG. 2, a communication for the virtual IP address "YYY" from the "client A" (client 40) is generated.

### (1) Step S201

The "client A" (client 40) transmits the packet for the virtual IP address "YYY".

### (2) Step S202

The NW equipment 1 (network equipment 20-1) is connected with the "client A" (client 40) as an input side edge switch (ingress switch). Therefore, the packet control section 24 of the NW equipment 1 (network equipment 20-1) receives the packet for the virtual IP address "YYY" from the "client A" (client 40) and confirms whether or not the entry corresponding to the reception packet has been registered on the flow table in its own flow table storage section 23. The packet control section 24 transfers the packet for the virtual IP address "YYY" according to the action defined by the entry when the entry has been registered.

### (3) Step S203

Because the NW equipment 1 (network equipment 20-1) received the packet for the virtual IP address "YYY" for the first time, the entry corresponding to the reception packet has not been registered on the flow table in its own flow table storage section 23. Therefore, the flow control section 22 of the NW equipment 1 (network equipment 20-1) requests the entry for the flow of packets for the IP address "YYY" to the control unit 10.

### (4) Step S204

The control unit 10 selects either the server B (server equipment 30-2) or the server D (server equipment 30-4) as the destination of the packets for the IP address "YYY" when requesting the entry for the flow of packets for the IP address "YYY". At this time, the route calculating section 13 of the control unit 10 refers to the server equipment table 122 shown in FIG. 4, and selects the server D (server equipment 30-4) with the smallest CPU average usage rate, because the CPU average usage rate of the server B (server equipment 30-2) is "30%" and the CPU average usage rate of the server D (server equipment 30-4) is "15%".

### (5) Step S205

Also, the route calculating section 13 refers to the NW equipment table 121 shown in FIG. 3 to determine the route such that the packet is transferred on the route with the smallest NW average usage rate. In this case, the route calculating section 13 selects the NW equipment 3 (network equipment 20-3) as the next node to the NW equipment 1 (network equipment 20-3) in consideration of priority or a distance from the NW equipment 1 (network equipment 20-3), although there is no difference even if either the the NW equipment 3 (network equipment 20-3) or the NW equipment 4 (network equipment 20-4) is used as the next node because the NW average usage rate of the NW equipment 3 (network equipment 20-3) is "60%", and the NW average usage rate of the NW equipment 4 (network equipment 20-4) is "60%". Also, the route calculating section 13 determines the NW equipment 6 (network equipment 20-6) as the next node to the NW equipment 3 (network equipment 20-3), because the NW average usage rate of the NW equipment 5 (network equipment 20-5) is "35%" and the NW average usage rate of the NW equipment 6 (network equipment 20-6) are "10%". In this way, the route calculating section 13 finally determines the route so as to transfer the packet on the route of "the NW equipment 1 → the NW equipment 3 → the NW equipment 6 → the server D" having the smallest NW average usage rate, and stores this route data in the route data storage section 14. That is, the optimal route is "the NW equipment 1 (network equipment 20-1) → the NW equipment 3 (network equipment 20-3) → the NW equipment 6 (network equipment 20-6) → the server D (server equipment 30-4)".

### (6) Step S206

The flow control section 15 of the control unit 10 defines the entry to each of the network equipments on the optimal route based on the route data of the optimal route read from the route data storage section 14, and registers the entry on the flow table of its own flow table storage section 16 and the flow table of each of the network equipments on the optimal route. In this case, the network equipments on the optimal route are the NW equipment 1 (network equipment 20-1), the NW equipment 3 (network equipment 20-3) and the NW equipment 6 (network equipment 20-6). The flow control section 15 registers the entry to transfer the packets for the virtual IP address "YYY" to the next node on the optimal route on the flow tables of the NW equipment 1 (network equipment 20-1), the NW equipment 3 (network equipment 20-3) and the NW equipment 6 (network equipment 20-6).

### (7) Step S207

The flow control section 22 of each of the network equipments on the optimal route registers the entry to transfer the packet for the virtual IP address "YYY" to the next node on the optimal route on the flow table in its own flow table storage section 23 according to the entry registration processing by the control unit 10. That is, the NW equipment 1 (network equipment 20-1), the NW equipment 3 (network equipment 20-3) and the NW equipment 6 (network equipment 20-5) register the entries to transfer the packet for the virtual IP address "YYY" to the next node on the optimal route on the flow table in its own flow table storage section 23 according to the entry registration processing from the control unit 10.

### (8) Step S208

The packet which arrived at the NW equipment 1 (network equipment 20-1) is transferred at the route which is called "the NW equipment 1→the NW equipment 3→the NW equipment 6 → the server D" with the smallest NW average usage rate. That is, the NW equipment 1 (network equipment 20-1) transfers the packet for the virtual IP address "YYY" to the NW equipment 3 (network equipment 20-3) according to the entry registered on its own flow table. The NW equipment 3 (network equipment 20-3) transfers the packet for the virtual IP address "YYY" to the NW equipment 6 (network equipment 20-6) according to the entry registered on its own flow table. The NW equipment 6 (network equipment 20-6) transfers the packet for the virtual IP address "YYY" to the server D (server equipment 30-4) according to the entry registered on its own flow table.

### (Supplement)

Which of the operation 1 shown in FIG. 5 and the operation 2 shown in FIG. 6 should be adopted as the operation of the optimal route control processing may be changed and determined according to the content of the service provided to the client by the server equipment as a destination (access destination) defined by the the virtual IP address. For example, the route calculating section 13 of the control unit 10 determines which of the operation 1 shown in FIG. 5 and the operation 2 shown in FIG. 6 should be adopted, according to the content of the service provided to the client by the server equipment as the destination (access destination) of the the virtual IP address.

Also, the content of the performance data to be used may freely re-arranged. For example, an optimal server is selected from the server group based on "the CPU average usage rate", and an optimal route is determined based on "the network usage rate". Or, both of "the CPU usage rate" and "the CPU average usage rate" may be referred to so as to select the optimal server from the server group, and both of "the network usage rate" and "the network average usage rate" may be referred to so as to determine an optimal route. For example, which data of the performance data accumulated by the performance data storage section 12 the route calculating section 13 of the control unit 10 should use according to the content of the service provided to the client by the server equipment as the destination (access destination) of the the virtual IP address. At this time, the route calculating section 13 changes and determines the optimal condition condition defining which data should be used.

It should be noted that "the CPU usage rate", "the CPU average usage rate", "the NW usage rate", "the NW average usage rate" are only an example of the performance data. Actually, the present invention is not limited to these data. For example, "the memory usage rate", "the performance of the CPU (classification)", "a data transfer rate", "the number of users" and so on may be used.

### (Other exemplary embodiments)

The technique which registers entry on the flow table of the network equipment in the open flow technique is mainly classified into two methods of "a proactive type" and "a reactive type".

In the "proactive type", the control unit calculates a route (path) of a predetermined packet group (flow) "previously (before data communication starts)" and registers an entry on the flow table of the network equipment. That is, "the proactive type" indicates "the previous entry registration" which is voluntarily carried out by the control unit.

In "the reactive type", the control unit calculates a route of the packet group (flow) when an inquiry of "the first packet (new packet for which any entry has not been registered)" is received from the network equipment and registers the entry on the flow table of the network equipment. That is, "the reactive type" indicates "real-time entry registration" which is carried out by the control unit according to the inquiry from the network equipment at the time of actual data communication.

In the open flow network, "the reactive type" is mainly used in which the control unit registers the entry for the reception packet when receiving the inquiry of the first packet from the network equipment.

In the present invention, "the reactive type" has been described as an example. However, actually, "the Proactive type" may be adopted. For example, the control unit collects topology data and the performance data from the network equipment and the server equipment, before communication start for the packets that are expected to be arrived, calculates an optimal route of the packets that is expected to be arrived based on the topology data and the performance data in the present situation (or the past situation), and registers the entry of the flow on the flow table of the corresponding network equipment previously. In this case, the control unit can register the entry of the flow on the flow table of the network equipment without receiving the inquiry of the packet from the network equipment.

### (Features of the present invention)

In the central control-type network system using the open flow (OpenFlow) technique, the improvement of the operability and performance of the network is expected through the flexible network control.

The present invention makes it possible to select an optimal route in consideration of the load situation of the network equipment, the load situation of the server equipment, and the load situation of the application, in the conventional network system which carries out the central control of a communication route. Also, the optimal route is estimated and selected based on the past data in addition to the present (latest) data.

The present invention attains the conventional objects through the following methods.
(1) The control unit which carries out a central control of all the equipments such as network equipments and server equipments calculates an optimal route and sets a communication route to the network equipments.
(2) The congestion situation of the network and the load situation of the server and the application are checked so as to determine an optimal route.
(3) A phenomenon which could generate in the future is checked from the past congestion situation and the past load situation in addition to the situation of the present time so as to determines the optimal route.

Through the above method, the optimal route can be selected in an application level and a service level containing the network equipments and the server equipments. Also, a route can be selected in consideration of a problem which could occur in the future through prediction based on data in the past. As a result, the route control is made possible which is not optimized individually in each layer but is optimized as the whole system.

In the conventional technique, there is a problem that a route could not be changed according to a load situation so that an overflowing packet was discarded or a long time is required for transfer of a great deal of data so that the delay occurs in the packets having low priority. However, in the present invention, because a current (the latest) CPU usage rate, and a NW usage rate are selected as the optimal condition, a great effect is achieved in an application to transmit a lot of data in a short time (e.g. file transfer).

In a conventional technique, there is a case that a communication is affected by another momentarily occurring communication so that a delay sometimes occurred. However, in the present invention, when a CPU and a NW average usage rate are selected as the optimal condition, a superior effect can be obtained in an application (IP telephone) that the communication continues for a long time although there are few amounts of data. If a route of a low average usage rate can be selected, it is easy to avoid the above problem stochastically.

Also, in the conventional technique, because each network equipment determined a route autonomously, it is difficult to select the optimal route every application. However, in the present invention, because the route can be selected (specified) every flow, the whole system can be efficiently used.

For example, the optimal route can be selected by specifying the optimal condition for the application, so as to determine a route by using the current (latest) usage rate as an optimal condition with respect to a flow of FTP (File Transfer Protocol) by an "application which a large amount of communication occurs momentarily", and so as to determine the route by using an average usage rate as the optimal condition with respect to a flow such as IP telephone and it determines a route, and so on.

Also, in the conventional technique, because a load balancer is used for load distribution of the server and all communications must pass through the load balancer, there was a problem that it is not possible to sufficiently secure availability and performance. However, in the present invention, because the route can be selected in consideration of the load of the server (CPU usage rate), the load distribution of the server can be carried out without using the load balancer.

### (Supplemental notes)

Part or all of the above-mentioned exemplary embodiments can be described in the following supplemental notes. However, actually, it is not limited to the following specified example.

### (Supplemental note 1)

A control unit is composed of:
a first communication section configured to communicate with a network equipment as a management target;
a second communication section configured to communicate with server equipments which forms an identical server group and shares a virtual address allocated to the server group;
a data acquiring section configured to acquire performance data from each of the network equipments and the server equipments and to store the performance data;
a server selecting section configured to select an optimal server equipment from among the server equipments of the server group based on the performance data of the server equipments;
a route calculating section configured to determine an optimal route to the optimal server equipment based on the performance data of the network equipments; and
a flow control section configured to register on the network equipments on the optimal route, entries defining a rule to uniformly control packets as a flow and an action to transfer the packet for the virtual address to a next node on the optimal route.

### (Supplemental note 2)

In the control unit according to supplemental note 1, the server selecting section selects the optimal server equipment based on at least one of a latest CPU usage rate and a CPU average usage rate of the server equipments as the performance data of the server equipment, and
the route calculating section determines the optimal route to the optimal server equipment based on at least one of a latest network usage rate and a network average usage rate of the network equipment as the performance data of the network equipment as the performance data of the server equipment.

### (Supplemental note 3)

The control unit according to supplemental note 1 or 2 is further composed of:
a condition changing section configured to change the optimal condition defining data to use as the performance data of each of the network equipments and the server equipments according to a kind of the packet for the virtual address and a content of a service provided by the server; and
a data selecting section configured to select data defined in the optimal condition from among the stored performance data, and
the server selecting section determines the optimal server equipment based on the data defined in the optimal condition, and the route calculating section determines the optimal route based on the data defined in the optimal condition.

### (Supplemental note 4)

A program making a computer execute:
a step of communicating with a network equipment as a management target;
a step of communicating with server equipments which form an identical server group and share a virtual address allocated to the server group;
a step of acquiring and storing the performance data from the network equipments and the server equipments;
a step of selecting an optimal server equipment from among the server equipments of the server group based on the performance data of the server equipments;
a step of determining an optimal route to the optimal server equipment based on the performance data of the network equipments; and
a step of registering on the network equipments on the optimal route, entries defining a rule to uniformly control packets as a flow and an action to transfer the packets for the virtual address to a next on the optimal route.

### (Supplemental note 5)

The program according to supplemental note 4 making the computer execute:
a step of selecting the optimal server equipment based on at least one of a latest CPU usage rate and a CPU average usage rate of the server equipment as the performance data of the server equipment; and
a step of determining the optimal route to the optimal server equipment based on at least one of a latest network usage rate and a network average usage rate of the network equipment as the performance data of the network equipment.

### (Supplemental note 6)

The program according to supplemental note 4 or 5 making the computer execute:
a step of changing an optimal condition defining data to be used as the performance data of the network equipment and the server equipment according to a kind of the packet for the virtual address and a content of the service provided by the server;
a step of selecting data defined in the optimal condition from among the stored performance data and determining the optimal server equipment and the optimal route based on the data defined in the optimal condition.

### (Remarks)

As described above, the exemplary embodiments of the present invention have been described in detail. However, the present invention is actually not limited to the above-mentioned exemplary embodiments and modifications which do not deviate from a scope of the present invention are contained in the present invention.

It should be noted that the present application claims a priority on convention based on Japanese Patent Application No. 2011-014053, and the disclosure thereof is incorporated herein by reference.

## Claims

1. A network system comprising:
network equipments;
a control unit configured to set, when receiving an inquiry about the packets from one of said network equipments, an entry defining a rule and an operation to uniformly control packets as a flow, on a flow table of said one network equipment; and
server equipments configured to form an identical server group and share a virtual address allocated to said server group,
wherein said control unit comprises:
means for collecting and storing performance data from said network equipments and said server equipments;
means for selecting an optimal server equipment from among said server equipments of said server group based on the performance data of said server equipments;
means for determining an optimal route to said optimal server equipment based on the performance data of said network equipments; and
means for registering the entry to transfer the packets for the virtual address to a next node on the optimal route, on said network equipment on the optimal route.

2. The network system according to claim 1, wherein said control unit comprises:
means for selecting said optimal server equipment based on at least one of latest CPU usage rates and CPU average usage rates of said server equipments as the performance data of said server equipments; and
means for determining the optimal route to said optimal server equipment based on at least one of latest network usage rates and network average usage rates of said network equipments as the performance data of said network equipments.

3. The network system according to claim 1 or 2, wherein said control unit further comprises:
means for changing an optimal condition defining data used as the performance data of each of said network equipments and said server equipments based on a type of the packets for the virtual address and a content of service provided by said server equipment; and
means for selecting the data defined by the optimal condition from among the stored performance data, and determining the optimal server equipment and the optimal route based on the data defined by the optimal condition.

4. A control unit comprising:
means for communicating with each of network equipment as a management target;
means for communicating with one of server equipments which form an identical server group and share a virtual address allocated to the server group;
means for collecting and storing performance data from said network equipments and said server equipments;
means for selecting an optimal server equipment from among said server equipments which form an identical server group, based on the performance data of said server equipments;
means for determining the optimal route to said optimal server equipment based on the performance data of said network equipment; and
means for registering an entry defining a rule to uniformly control the packets as a flow and a transfer operation of the packets for the virtual address, to a next node on the optimal route, in said network equipment on the optimal route.

5. The control unit according to claim 4, further comprising:
means for selecting the optimal server equipment based on at least one of latest CPU usage rates and latest CPU average usage rates of said server equipments as the performance data of said server equipments; and
means for determining the optimal route to the optimal server equipment based on at least one of latest network usage rate and latest network average usage rates of said network equipments as the performance data of said network equipment.

6. The control unit according to claim 4 or 5, further comprising:
means for changing an optimal condition defining data used as the performance data of said network equipment and said server equipment based on a type of the packets for the virtual address and a content of a service provided by said server equipment; and
means for selecting the data defined by the optimal condition from among the stored performance data and determining said optimal server equipment and said optimal route based on the data defined by the optimal condition.

7. An optimal route controlling method executed by a computer used as a control unit;
communicating with each of network equipments as a management target;
communicating with server equipments which form an identical server group and which share a virtual address allocated to the server group;
collecting and storing performance data from said network equipments and said server equipments;
selecting an optimal server equipment from among server equipments of the server group based on the performance data of said server equipment;
determining an optimal route to an optimal server equipment based on the performance data of said network equipment; and
registering an entry defining a rule to uniformly control a packet as a flow and an operation to transfer the packet for the virtual address to a next node on the optimal route, in said network equipment on the optimal route.

8. The optimal route controlling method according to claim 7, further comprising:
selecting an optimal server equipment based on at least one of latest CPU usage rates and latest CPU average usage rates of said server equipments as the performance data of said server equipments; and
determining an optimal route to the optimal server equipment based on at least one of latest network usage rates and latest network average usage rates of said network equipments as the performance data of said network equipments.

9. The optimal route controlling method according to claim 7 or 8, further comprising:
changing an optimal condition defining data used as the performance data of said network equipments and said server equipments based on a type of the packets for the virtual address and a content of a service provided by said server equipments; and
selecting the data defined by the optimal condition from among the stored performance data and determining said optimal server equipment and the optimal route based on the data defined by the optimal condition.

10. A recording medium which stores a program code making a computer used as a control unit execute:
a step of communicating with network equipments as a management target;
a step of communicating with server equipments which form an identical server group and which share a virtual address allocated to the server group;
a step of collecting and storing performance data from said network equipments and said server equipments;
a step of selecting an optimal server equipment from among said server equipments of the server group based on the performance data of said server equipments;
a step of determining an optimal route to an optimal server equipment based on the performance data of said network equipments; and
a step of registering an entry defining a rule to uniformly control packets as a flow and an action to transfer the packets for the virtual address to a next node on the optimal route, on said network equipments on the optimal route.
